# EUROPEAN PATENT SPECIFICATION

(11) **EP 4 214 406 B1**
(45) Date of publication and mention of the grant of the patent: **23.09.2026**
(21) Application number: 21762344.6
(22) Date of filing: 11.08.2021
(51) Int. Cl.: F02D 9/16

(54) **ROTARY VALVE**
DREHSCHIEBER
SOUPAPE ROTATIVE

(30) Priority: 21.08.2020 GB 202013055
(43) Date of publication of application: 26.07.2023
(73) Proprietor: Caterpillar Energy Solutions GmbH, 68167 Mannheim (DE)
(72) Inventor: SNUIS, Hans-Bernhard, 68167 Mannheim (DE)
(74) Representative: Novagraaf Group
(86) International application number: PCT/EP2021/025309
(87) International publication number: WO 2022/037804

(56) References cited:
- EP-A1- 2 860 382
- WO-A1-2011/068452
- JP-A- 2007 113 506
- US-A1- 2010 251 987
- US-A1- 2011 107 995
- US-A1- 2018 328 318
- US-B2- 7 757 660

## Description

### Technical Field

The present invention pertains to a rotary valve for a combustion engine having improved flow conditions and valve actuation as well as a corresponding combustion engine comprising such valve.

### Technological Background

In gas engines generally one or more valves are present in order to provide a controlled volume flow of e.g. a gaseous mixture or air. Conventionally, such rotary valves comprise a solid, hollow cylinder which has holes for controlling the volume flow. In an opened state of the valve, the curved contour of the flow channel may cause unfavorable flow conditions, which result in high-pressure losses. This may both impair the performance of the engine and adversely affect the required actuating forces for maintaining the valve in a predefined state.

In addition, the weight of the solid, hollow cylinders constitutes a moment of inertia that requires corresponding actuating forces, which may be particularly increased during dynamic operation. This again may result in an insufficient capability for sudden load requests (or even load steps). The required actuating force of the valve may hence not only be defined by the flow behavior and the curved contour of the flow channel, e.g. due to counterforces acting upon the rotatable cylinder, but may furthermore be increased due to the significant moment of inertia.

From US 2010/0251987 Al and US 2011/0107995 A1 a valve housing for a rotary valve having a rectangular duct and a rotatable valve plate is known. Furthermore, EP 2 860 382 A1 discloses a rotary carburetor with a cylindrical valve element and US 2018/0328318 A1 discloses a valve housing with a pivotable flap for a recirculation duct.

Accordingly, there is a need to improve current rotary valves for combustion engines and to at least partially abrogate the above unfavorable conditions.

### Summary of the Invention

Starting from the prior art, it is an objective to provide a new and inventive rotary valve for a combustion engine. In particular, it may be an objective to provide a rotary valve with improved flow conditions and which facilitates valve actuation, preferably also during dynamic operation or varying operational conditions of the combustion engine.

This objective is solved by means of a rotary valve with the features of claim 1 and a combustion engine with the features of claim 15. Preferred embodiments are set forth in the present specification, the Figures as well as the dependent claims.

Accordingly, a rotary valve for a combustion engine, preferably a gas engine, is suggested, which comprises a housing defining a longitudinal direction of the rotary valve, wherein the housing comprises an essentially cylindrical shape in the longitudinal direction and comprises a through channel for providing a fluid flow, wherein the channel defines a flow direction essentially perpendicular to the longitudinal axis. The rotary valve furthermore comprises a closure, wherein said closure is pivotable relative to the housing between a closed position closing the channel at one flow directional end of the channel and an open position enabling fluid flow through the channel. The channel comprises two guide plates, which extend along the flow direction and the longitudinal direction at radially opposing ends of the channel and define a flow path, wherein the extension of the guide plates is at least in part linear, wherein the guide plates are formed as an essentially plane surface and have different extensions in the flow direction, wherein one of the guide plates is positioned closer to a wall of the housing in a radial direction or in a direction perpendicular to the flow direction and is in contact with opposing flow directional ends of the channel, and wherein the other guide plate contacts only one flow directional end of the channel, thereby permitting a pivoting of the closure around the free end of said other guide plate and an alignment of the closure along a surface of said other guide plate opposite to the flow path in the open position of the closure.

Furthermore, a combustion engine comprising at least one corresponding rotary valve is suggested.

### Brief Description of the Drawings

The present disclosure will be more readily appreciated by reference to the following detailed description when being considered in connection with the accompanying drawings in which:
Fig. 1A schematically shows a rotary valve according to the invention in a cross-sectional or top view, wherein the closure is in the opened position;
Fig. 1B schematically shows a rotary valve according to Figure 1A, wherein the closure is in the closed position;
Fig. 2A schematically shows a rotary valve according to the invention in a longitudinal section or side view with two axes; and
Fig. 2B schematically shows a rotary valve according to the invention in a longitudinal section or side view with a single axis.

### Detailed Description of Preferred Embodiments

In the following, the invention will be explained in more detail with reference to the accompanying figures. In the Figures, like elements are denoted by identical reference numerals and repeated description thereof may be omitted in order to avoid redundancies.

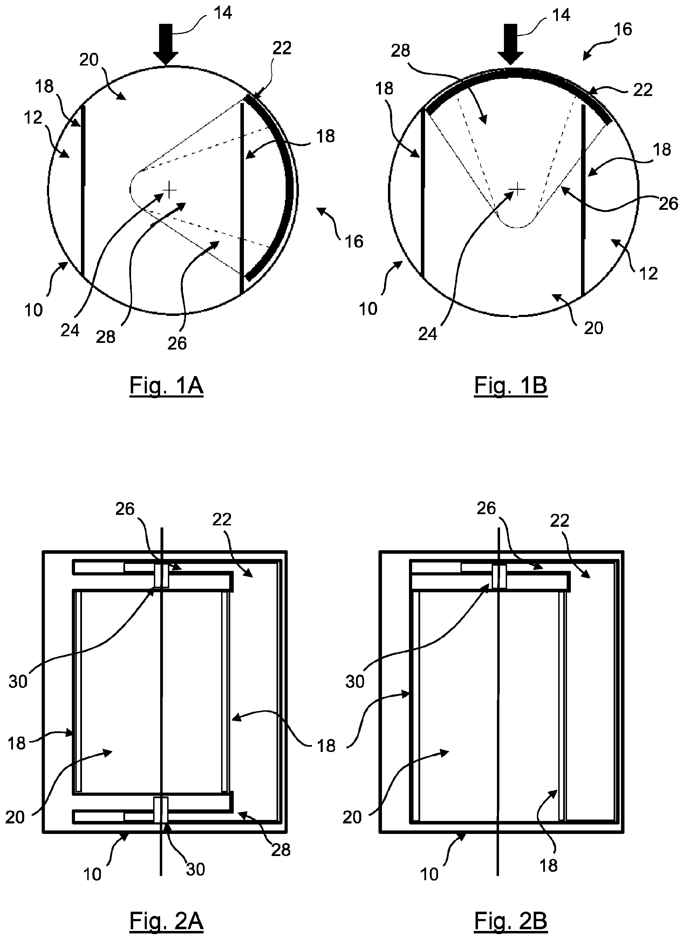

In Figures 1A and 1B a rotary valve according to an embodiment of the invention is shown in a cross-sectional and top view. The rotary valve comprises a housing 10 which is formed in an essentially cylindrical shape, which defines a longitudinal or vertical axis of the rotary valve. Although various materials may be used for the housing 10, in an exemplary embodiment, the housing 10 may be formed of stainless steel. In the interior of the housing 10, a through channel 12 is formed, such that a fluid flow may be provided through the channel 12 and the housing 10 in a predefined flow direction 14, as indicated by the large arrow at the top of the respective Figures. The flow direction 14 is essentially perpendicular to the longitudinal axis (not shown, but directly perpendicular to the cross-section) and allows a volume flow of one or more fluids required for a combustion engine, such as a gas engine, e.g. a combustible gaseous mixture and/or air.

The rotary valve furthermore comprises a closure 16, which is arranged in a pivotable manner relative to the housing 10 between a closed position closing the channel 12 at one flow directional end of the channel 12 and an open position enabling fluid flow through the channel 12. More particularly, the closure 16 is arranged to selectively close and open a flow path 20, which is defined by two guide plates 18 arranged in the channel 12 and extend along the flow direction 14 and the longitudinal direction at radially opposing ends or horizontal sides of the channel 12. Thus, by pivoting the closure 16, an opening and closing of the channel 12 and the flow path 20 may be achieved, as shown in Figures 1A and 1B, respectively. Although the guide plates 18 may also be formed of various materials, according to an exemplary embodiment, the guide plates 18 are also formed of stainless steel.

For improved flow conditions and an improved predictability of the flow behavior and pressure within the rotary valve, the extension of the guide plates 18 is linear and the guide plates 18 are formed as an essentially planar, straight surface comprising an essentially rectangular shape. Thereby, a fixed flow path 20 is provided without any undesirable deflections or curvatures, which may be unfavorable for the flow conditions within the flow path 20 in the channel 12.

As shown in Figures 1A and 1B the guide plates 18 have different extensions in the flow direction 14. One of the guide plates 18, shown on the left in the Figures, is positioned closer to a wall of the housing 10 in a radial direction or in a direction perpendicular to the flow direction 14 and contacts the inner wall of the housing 10 or channel 12 at the opposing flow directional ends. The other guide plate 18, shown on the right in the Figures, contacts only one flow directional end of the channel 12, thereby permitting a pivoting of the closure 16 around the free end of said guide plate 18, as indicated in Figure 1B, and an alignment of the closure 16 along a surface of said guide plate 18 opposite to the flow path 20 in the open position of the closure 16, as indicated in Figure 1A.

Accordingly, although other arrangements may be provided, the closure 16 closes the channel 12 and flow path 20 at an inlet of the rotary valve.

The pivoting of the closure 16 occurs about a pivot point 24, indicated with the cross. More particularly, the closure 16 comprises a flap 22, which is coupled to the pivot point 24 via an upper lever 26 and a lower lever 28, the latter being indicated with the dashed lines. In other words, said levers 26, 28 are arranged at opposite longitudinal ends of the flow path 20, which is shown in further detail in Figure 2A below.

The arrangement and dimensioning of the guide plates 18 provide, in conjunction with the arrangement of the closure 16 or flap 22 and levers 26, 28 as well as the pivot point 24, that the closure 16 is pivotable about 90 degrees around said pivot point 24. The pivot point 24 is furthermore slightly offset towards the right guide plate 18 and towards the flow directional end or inlet of the flow path 20 to facilitate the pivoting of the closure 16 or flap 22 around said guide plate 18 while enabling or maintaining a predefined length or extension of the guide plates 18 and thus the flow path 20.

The flap 22 comprises a parabolic or arc shape and defines a continuous convex surface, which is directed towards the inlet of the flow path 20 or channel 12 in the closed state, as best shown in Figure 1B. The flap 22 is, optionally, formed of a thin metal sheet, such that actuation forces required for positioning the flap 22 may be significantly reduced due to the low moment of inertia. Furthermore, the convex orientation ensures that the flap 22 is securely seated in and biased towards the inlet of the flow path 20 in the closed position of the closure 16. In addition, the closure 16 is arranged such that the flap 22 contacts at least the inlet end of the left guide plate 18 and is adjacent to the inlet end of the right guide plate 18, thereby improving the effective prevention of a volume flow through the flow path 20 and the channel 12.

In Figures 2A and 2B the rotary valve according to the invention is depicted in two alternative embodiments shown in a longitudinal section. In both Figures, the flap 22 is coupled to a pivot point (not shown), which is provided in the form of an axis 30, providing a bearing structure for the flap 22 and coupling to a pivoting mechanism or external actuator, e.g. via a shaft.

In Figure 2A the flap 22 is held by and pivotable around two concentric axes 30, which are arranged at opposing longitudinal ends of the channel, said ends being defined by the longitudinal axis depicted by the dashed line. The axes 30 are coupled to the flap 22 by means of an upper lever 26 and a lower lever 28, wherein each lever 26, 28 may be formed either as a single lever or coupling arm or a plurality of levers or coupling arms, e.g. two. In the embodiment, and as also indicated in Figures 1A and 1B, each lever 26, 28 may optionally be formed of a single lever, which extends in a circumferential direction with increasing radial extension, so as to define a pie shape or wedge shape.

An embodiment having a single axis 30 and only an upper lever 26 is depicted in Figure 2B. Whereas the provision of an upper lever 26 and lower lever 28, as shown in Figure 2A, may provide improved mechanical and/or rotational stability, the provision of only an upper (or, alternatively, lower) lever 28 has the advantage that the height of the flow path may be increased, as indicated by the different longitudinal extension of the flow paths in Figures 2A and 2B. Furthermore, the mass and moment of inertia of the closure 16 may be further reduced. Thereby, different embodiments may be provided according to the requirements of the rotary valve.

The flow path 20 is furthermore offset towards a center point of the housing 10 in a direction perpendicular to the flow direction, i.e. laterally or sideways. Thereby, the flap 22 may be aligned only on one side of the flow path 20, such that the available space may be used to increase the width of the flow path 20 compared to an arrangement, wherein the flow path 20 is arranged along the center point of the housing 10 and the width would be reduced to accommodate the flap 22 on at least one side of the flow path 20 and/or along a respective guide plate 18. Accordingly, various arrangements are possible so as to adapt the dimensioning of the flow path 20 to the rotary valve requirements and available space of the corresponding channel.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is in particular the case with respect to the following optional features which may be combined with some or all embodiments, items and/or features mentioned before in any technically feasible combination.

A rotary valve for a combustion engine, preferably a gas engine, is provided.

Such valve comprises a housing defining a longitudinal direction of the rotary valve and comprising a through channel for providing a fluid flow. The channel defines a flow direction essentially perpendicular to the longitudinal axis. The rotary valve furthermore comprises a closure, wherein said closure is pivotable relative to the housing between a closed position closing the channel at one flow directional end of the channel and an open position enabling fluid flow through the channel. The channel comprises at least two guide plates, which extend along the flow direction and the longitudinal direction at radially opposing ends of the channel and define a flow path, wherein the extension of the guide plates is at least in part linear.

By means of the guide plates a fixed flow path may be provided having reduced curvature with respect to conventional hollow cylinders and which may hence provide improved flow conditions. Thereby, flow losses and the occurrence of high-pressure losses may be reduced during operation of a combustion engine. Furthermore, the improved flow conditions result in reduced counteracting forces on the closure, such that actuating forces may be accordingly reduced and a more constant valve behavior may be expected that is favorably for the engine performance. Accordingly, flow conditions may also be improved during dynamic operation of the combustion engine.

The actual opening and closing of the channel is hence performed by the closure, which may be formed as a valve member of the valve. Although various arrangements may be provided, the closure is preferably pivotable or rotatable in a circumferential direction around the longitudinal axis, such that the closure may be arranged in a plane defined by the flow direction and a direction perpendicular to said flow direction. In other words, the closure may form a cross-section for the volume flow by means of rotation of the closure into the closed position within a horizontal plane, the longitudinal axis defining an essentially vertical plane. Actuation of the closure may furthermore be provided by means of a pivoting mechanism, such as an (external) actuator or motor that is coupled with the closure, e.g. via a shaft.

As outlined in the above, the at least two guide plates may hence provide a fixed flow channel forming e.g. at least partially straight sides of a flow path, which may be particularly advantageous in case of a housing and/or channel having an essentially cylindrical or curved shape. However, it is to be understood that more guide plates may be implemented, e.g. one or more guide plates arranged at (opposing) longitudinal ends of the flow path so as to define a top and/or bottom of the flow path. Thereby, an at least partially, preferably fully, rectangular flow path may be provided. Alternatively, such top and/or bottom ends of the flow path may also be defined by an insert or wall protruding from the housing or as a part of the closure, e.g. a bearing structure of the closure. Furthermore, the guide plates arranged at the sides may each comprise one or more guide plates, e.g. to accommodate for varying lengths of the flow path depending on the dimensioning of the housing and/or to adjust the flow path to particular predefined geometries. Optionally, the guide plates may hence form a modular arrangement.

The guide plates are formed as an essentially plane surface and may be formed as a straight surface and/or comprise an essentially rectangular, prismatic, or trapezoid shape.

Thus, at least the sides of a flow path defined by the guide plates may be formed without curvatures or deflection, thereby further improving the fluid flow conditions within the valve. Although a prismatic and/or trapezoid shape may also be formed as an essentially rectangular shape, such shapes may be truncated and/or inclined, e.g. at a flow directional end defining an inlet or outlet of the valve or channel, so as to provide an improved fitting and avoid any significant gaps between the guide plate and the channel. Accordingly, flow loss and/or the occurrence of turbulences may be avoided or at least reduced.

In order to further reduce the moment of inertia of the closure and optimize the actuation of the closure, the closure preferably comprises a flap, wherein the flap has a semi-circular, curved, bent, parabolic, or arc shape dimensioned and arranged to prevent fluid flow in the closed position of the closure.

The flap may e.g. be formed of a (thin) metal sheet, such that the mass of the closure may be significantly reduced compared with conventional closures formed of a solid component such as a cylinder. Therefore, actuation forces may be significantly reduced.

In addition, the preferred shape of the flap provides a curvature that is advantageous to reduce flow resistance and to ensure that a biasing force may be provided, which ensures that the flap is maintained in the predefined position, e.g. in the closed state, when flow forces act upon the flap, and in the opened state, when the closure is pivoted away from the flow path and volume flow. Preferably, the curvature is provided in a convex manner towards the exterior of the housing or channel, wherein the closure is preferably arranged at an inlet of the flow path. In this manner, a volume flow at an inlet of the channel or flow path and acting upon the flap is effectively impaired or deflected, wherein the shape of the flap provides an improved fitting or biasing into the closed position, thereby reducing undesirable counteracting forces with regard to the actuation forces applied to the closure.

Furthermore, such convex structure increases the mechanical stability of the flap and closure while simultaneously facilitating the pivoting between the closed and opened position of the closure. By means of the curvature, the effective length or extension of the guide plates may be optimized so as to increase the length of a flow path defined by the guide plates and to further improve the flow conditions.

Although these advantages have been described in view of a curvature, it is to be understood that such advantages may, at least in part, also be obtained in case of a partly linear shape of the flap, e.g. in case of a bent shape comprising a (central) rounded angle.

A further improvement of the flow conditions may be provided by reducing or avoiding irregularities at the side of the guide plate being in contact with the volume flow in an opened state of the closure. For example, conventional valves frequently require one or more openings or bores, such that a cylindrical closure may rotate within the valve and through such openings or bores. To ensure free movement of such closures, the dimensions of these components are generally chosen so as to avoid a direct contact or interface between such components, thereby defining gaps and potentially requiring additional sealing means.

To avoid any modifications on the guide plates interfering with the volume flow and to maintain an essentially continuous surface interface within the flow path, the flap is hence preferably arranged along a surface of a guide plate opposite to the flow path in the open position of the closure.

The flap is hence not in fluid communication with the flow path and does not engage or extend through the guide plate, but may e.g. be aligned with a guide plate outside of the flow path. Thereby, no undesirable obstruction or irregularity is provided within the flow path, e.g. openings or bores, such that the flow conditions and the structural stability of the guide plates are improved. Such arrangement also allows a longer extension in the flow direction of the flow path, since the flap is not required to engage or extend through the guide plate(s) in order to bring the closure into the closed position. Such closing is provided by means of the pivoting arrangement.

The flap may be formed and arranged to contact at least one guide plate or each guide plate at the flow directional end of the channel in the closed position of the closure. The contact or interface is hence preferably provided at the flow directional end intended for volume flow control by means of the closure and may extend (entirely) across an inner surface, i.e. defining the flow path, or corresponding end of the respective guide plate in a longitudinal direction. Accordingly, rather than impairing or reducing a volume flow, the contact provides that a volume flow may be effectively prevented. It may be provided, that the flap contacts one guide plate and is directly adjacent to the flow directional end of the opposing guide plate. Preferably, the flap may also contact or be at least adjacent to the corresponding surface or end of a top and/or bottom surface of the flow path in order to further improve the closing function of the valve.

In addition, the contact may increase the mechanical stability of the valve in the closed position, e.g. by providing an improved biasing force and further reducing the required actuation forces to actuate the closure. Due to the contact, the available space within the channel is used more efficiently, such that an increased length of the flow path and the guide plates may be provided.

The actuation and pivoting of the closure or flap may be provided in various ways. Preferably, the flap is pivotable about at least one axis provided at a longitudinal end of the channel or about two concentric axes arranged at opposing longitudinal ends of the channel.

The respective axis may be provided at a side opposite to the flow path, such that the axis does not interfere with the volume flow. The axis not only enables the pivoting by defining a pivot point, but may also provide a load-bearing structure for the flap, such that the flap is held in place with respect to the flow path and guide plates at least in part by means of the axis. The respective axis may be coupled with a pivoting mechanism or means, such as an (external) actuator or motor, e.g. via a shaft.

The provision of two concentric axes at a top and bottom of the flow path provides improved structural stability and may form a level of redundancy in case of an undesirable decoupling at one of the axes.

On the other hand, an arrangement, wherein the flap is pivotably only about or around one axis, i.e. wherein one longitudinal end of the flap is free, may have the advantage that a simplified construction, manufacturing, and/or replacement of the flap may be provided and may furthermore reduce the required actuation forces for actuating the closure. In addition, due to the free end and the omission of an axis at one longitudinal end, the flow path may have larger dimensions in the longitudinal direction.

Preferably, the flap is coupled to the respective axis at the respective longitudinal end via at least one lever or coupling arm, preferably two levers or coupling arms, wherein ends of the levers or coupling arms that are attached to the flap are spaced apart in a pivoting direction.

The use of levers or coupling arms avoids the use of solid structures, such that the mass and moment of inertia of the closure and flap may be reduced. Thereby, a further reduction of the required actuating forces may be achieved. By means of the levers or coupling arms the flap may hence be pivoted about the axis in a circumferential direction about the longitudinal axis. An embodiment using two respective levers or coupling arms may furthermore increase the stability and add a level of redundancy without significantly increasing the moment of inertia. In an embodiment using one respective lever or coupling arm, the lever or coupling arm may extend in a circumferential direction with increasing radial extension, so as to define a pie shape or wedge shape. It will be understood that embodiments having two levers or coupling arms on one longitudinal end and having only one lever or coupling arm at the opposing longitudinal end are also possible and that the levers or coupling arms may also be offset to the respective longitudinal end, depending on the dimensions of the flap and the positioning of the respective axis.

To accommodate for a variety of shapes and dimensions of the closure, housing, and/or channel as well as the available space in the closed and opened position of the closure, the closure may be pivotable around an angle between 60 and 210 degrees, preferably between 80 and 100 degrees or about 90 degrees. For example, the angle may be dependent both on the length of the flow path and guide plates and a width of the flow path defined by a spacing between the guide plates in a direction perpendicular to the flow direction and the longitudinal direction. Whereas smaller widths with regard to the length of the flow path may require a corresponding smaller closure and may be arranged to be pivotable at lower angles, larger widths requiring larger closures may require to be pivotable at larger angles to enable a fully opened state.

In one embodiment, the closure may be pivotable around about 90 degrees, such that the closure may e.g. be aligned essentially in parallel with an outer surface of a guide plate opposite to the flow path in the opened state. Depending on the size of the housing and/or the channel, this may furthermore provide an improved use of the available space without adversely affecting the length of the flow path.

A pivot point of the closure may also be offset towards one of the guide plates and/or towards the flow directional end of the channel to facilitate a pivoting of the closure around at least one of the guide plates.

For example, an offset towards one guide plate, i.e. in a direction perpendicular to the flow direction and the longitudinal axis, together with an offset towards the flow directional end of the guide plate may reduce the dimensions of the closure or flap and enables that the closure or flap may be positioned adjacent to and outside of the guide plate and flow path in an open position of the closure. By means of the offset, a pivot may be provided, such that the closure or flap may move freely without requiring any modifications of the guide plates, such as bores, slits, openings, and the like. This again further improves the flow conditions and increases the structural stability of the valve and guide plates.

The offset furthermore provides that a flow path length may be increased, since the amount of required space for the closure or flap at the respective flow directional or closing end may be reduced and the available space in flow direction and within the channel may hence be used more efficiently. By the same token, such offset also facilitates that at least one end of the closure or flap may be brought into contact or engagement with at least one of the guide plates while maintaining the potential guide plate extension in the flow direction.

The flow path may be offset towards a center point of the housing in a direction perpendicular to the flow direction. In other words, the flow path may be offset in a lateral direction or sideways within the channel. Thereby, a larger or wider flow path may be provided, i.e. in a direction perpendicular to the flow direction, wherein a pivoting of the closure or flap may be provided only on one side of the flow path.

In order to adapt the flow path to a variety of different shapes and/or dimensions of the closure and/or channel and in accordance with the required space for the closure or flap in the closed and opened position, the guide plates have different extensions in the flow direction. By means of different lengths, one of the guide plates is positioned closer to a sidewall of the channel and may hence be shorter in length, e.g. in case of a sidewall comprising a curvature. Furthermore, by means of adaptation of the length it may be ensured that each guide plate is in contact with the channel at least at one flow directional end, such that an essentially continuous flow path may be provided through the channel. One guide plate extends such that the guide plate is in contact with opposing flow directional ends of the channel, e.g. at an inlet and outlet of the channel, while the opposing guide plate contacts the channel only at one flow directional end of the channel, e.g. the outlet, the other end, e.g. the inlet, being adapted to accommodate the closure or flap and to enable a pivoting of the closure or flap around the respective end of said guide plate.

The housing comprises an essentially cylindrical shape in the longitudinal direction. Thereby, an improved level of robustness and mechanical stability may be provided while simultaneously providing a fixed essentially straight flow path. Furthermore, such shape may be advantageous in terms of retrofitting purposes and standards of the respective combustion engine.

To increase the durability and compatibility with a variety of fluids, the housing and/or the closure may be made of stainless steel. Thereby, also a low maintenance and an improved tolerance to high loads may be achieved.

The rotary valve may advantageously be configured for selectively providing air and/or a combustible gas mixture. For example, the rotary valve may be configured to deliver air for a diesel engine or a gaseous mixture for a gas engine. The rotary valve may also be implemented as a throttle.

Furthermore, a combustion engine, preferably a gas engine, comprising at least one corresponding rotary valve, as described in the above, is suggested. As outlined in the above, the rotary valve may e.g. provide air and/or a combustible gaseous mixture, e.g. for a reciprocating engine or a gas engine for a turbine.

### Industrial Applicability

With reference to the Figures, a rotary valve for a combustion engine and a combustion engine equipped with at least one such rotary valve are suggested. The suggested rotary valve as mentioned above is applicable in a variety of engines, such as gas engines, which require a controlled volume flow and high pressures. Further, the rotary valve may replace conventional solid rotary valves or valve members as a replacement or retrofit part, which may be exchanged e.g. upon overhaul or prior to use.

## Claims

1. A rotary valve for a combustion engine, preferably a gas engine, comprising:
a housing (10) defining a longitudinal direction of the rotary valve, wherein the housing (10) comprises an essentially cylindrical shape in the longitudinal direction and comprises a through channel (12) for providing a fluid flow, the channel (12) defining a flow direction (14) essentially perpendicular to the longitudinal axis, and
a closure (16), said closure (16) being pivotable relative to the housing (10) between a closed position closing the channel (12) at one flow directional end of the channel (12) and an open position enabling fluid flow through the channel (12),
wherein the channel (12) comprises two guide plates (18) extending along the flow direction (14) and the longitudinal direction at radially opposing ends of the channel (12) and defining a flow path (20), the extension of the guide plates (18) being at least in part linear,
wherein the guide plates (18) are formed as an essentially plane surface and have different extensions in the flow direction (14), wherein one of the guide plates (18) is positioned closer to a wall of the housing (10) in a radial direction or in a direction perpendicular to the flow direction (14) and is in contact with opposing flow directional ends of the channel (12), and
wherein the other guide plate (18) contacts only one flow directional end of the channel (12), thereby permitting a pivoting of the closure (16) around the free end of said other guide plate (18) and an alignment of the closure (16) along a surface of said other guide plate (18) opposite to the flow path (20) in the open position of the closure (16).

2. The rotary valve according to claim 1, wherein the guide plates (18) are formed as an essentially straight surface and/or comprise an essentially rectangular, prismatic, or trapezoid shape.

3. The rotary valve according to claim 1 or 2, wherein the closure (16) comprises a flap (22), said flap (22) having a semi-circular, curved, bent, parabolic, or arc shape dimensioned and arranged to prevent fluid flow in the closed position of the closure (16).

4. The rotary valve according to claim 3, wherein the flap (22) is arranged along a surface of a guide plate (18) opposite to the flow path (20) in the open position of the closure (16).

5. The rotary valve according to claim 3 or 4, wherein the flap (22) is formed and arranged to contact at least one guide plate (18) or each guide plate (18) at the flow directional end of the channel (12) in the closed position of the closure (16).

6. The rotary valve according to any of claims 3 to 5, wherein the flap (22) is pivotable about at least one axis (30) provided at a longitudinal end of the channel (12) or about two concentric axes (30) arranged at opposing longitudinal ends of the channel (12).

7. The rotary valve according to claim 6, wherein the flap (22) is coupled to the respective axis (30) at the respective longitudinal end via at least one lever (26, 28) or coupling arm, preferably two levers (26, 28) or coupling arms, wherein ends of the levers (26, 28) or coupling arms that are attached to the flap (22) are spaced apart in a pivoting direction.

8. The rotary valve according to any of the preceding claims, wherein the closure (16) is pivotable around an angle between 60 and 210 degrees, preferably between 80 and 100 degrees or about 90 degrees.

9. The rotary valve according to any of the preceding claims, wherein a pivot point (24) is offset towards one of the guide plates (18) and/or towards the flow directional end of the flow path (20).

10. The rotary valve according to any of the preceding claims, wherein the flow path (20) is offset towards a center point of the housing (10) in a direction perpendicular to the flow direction (14).

11. The rotary valve according to any of the preceding claims, wherein the closure (16) is configured to close the channel (12) and the flow path (20) at an inlet of the rotary valve.

12. The rotary valve according to any of the preceding claims, wherein the housing (10) and/or the closure (16) are made of stainless steel.

13. The rotary valve according to any of the preceding claims configured for selectively providing air and/or a combustible gas mixture.

14. A combustion engine, preferably a gas engine, comprising at least one rotary valve according to any of the preceding claims.

## Patentansprüche

1. Drehschieber für einen Verbrennungsmotor, vorzugsweise einen Gasmotor, umfassend:
ein Gehäuse (10), das eine Längsrichtung des Drehschiebers definiert, wobei das Gehäuse (10) eine im Wesentlichen zylindrische Form in der Längsrichtung umfasst und einen Durchgangskanal (12) zum Bereitstellen einer Fluidströmung umfasst, wobei der Kanal (12) eine Strömungsrichtung (14) im Wesentlichen senkrecht zu der Längsachse definiert, und
einen Verschluss (16), wobei der Verschluss (16) relativ zu dem Gehäuse (10) zwischen einer geschlossenen Position, die den Kanal (12) an einem Strömungsrichtungsende des Kanals (12) schließt, und einer geöffneten Position, die eine Fluidströmung durch den Kanal (12) ermöglicht, schwenkbar ist,
wobei der Kanal (12) zwei Führungsplatten (18), die sich entlang der Strömungsrichtung (14) und der Längsrichtung an radial entgegengesetzten Enden des Kanals (12) erstrecken und einen Strömungsweg (20) definieren, umfasst, wobei die Erstreckung der Führungsplatten (18) mindestens teilweise linear ist,
wobei die Führungsplatten (18) als eine im Wesentlichen Ebene Oberfläche ausgebildet sind und unterschiedliche Erstreckungen in die Strömungsrichtung (14) aufweisen, wobei eine der Führungsplatten (18) näher an einer Wand des Gehäuses (10) in eine radiale Richtung oder in eine Richtung senkrecht zu der Strömungsrichtung (14) positioniert ist und in Kontakt mit entgegengesetzten Strömungsrichtungsenden des Kanals (12) steht, und
wobei die andere Führungsplatte (18) nur ein Strömungsrichtungsende des Kanals (12) kontaktiert, wobei dadurch ein Schwenken des Verschlusses (16) um das freie Ende der anderen Führungsplatte (18) und eine Ausrichtung des Verschlusses (16) entlang einer Oberfläche der anderen Führungsplatte (18) gegenüber dem Strömungsweg (20) in der geöffneten Position des Verschlusses (16) zugelassen wird.

2. Drehschieber nach Anspruch 1, wobei die Führungsplatten (18) als eine im Wesentlichen gerade Oberfläche ausgebildet sind und/oder eine im Wesentlichen rechteckige, prismatische oder trapezförmige Form umfassen.

3. Drehschieber nach Anspruch 1 oder 2, wobei der Verschluss (16) eine Klappe (22) umfasst, wobei die Klappe (22) eine halbkreisförmige, gekrümmte, gebogene, parabolische oder bogenförmige Form, die bemessen und angeordnet ist, um Fluidströmung in der geschlossenen Position des Verschlusses (16) zu verhindern, aufweist.

4. Drehschieber nach Anspruch 3, wobei die Klappe (22) entlang einer Oberfläche einer Führungsplatte (18) gegenüber dem Strömungsweg (20) in der geöffneten Position des Verschlusses (16) angeordnet ist.

5. Drehschieber nach Anspruch 3 oder 4, wobei die Klappe (22) ausgebildet und angeordnet ist, um in der geschlossenen Position des Verschlusses (16) mindestens eine Führungsplatte (18) oder jede Führungsplatte (18) an dem Strömungsrichtungsende des Kanals (12) zu kontaktieren.

6. Drehschieber nach einem der Ansprüche 3 bis 5, wobei die Klappe (22) um mindestens eine Achse (30), die an einem Längsende des Kanals (12) bereitgestellt ist, oder um zwei konzentrische Achsen (30), die an entgegengesetzten Längsenden des Kanals (12) angeordnet sind, schwenkbar ist.

7. Drehschieber nach Anspruch 6, wobei die Klappe (22) an dem jeweiligen Längsende über mindestens einen Hebel (26, 28) oder Kopplungsarm, vorzugsweise zwei Hebel (26, 28) oder Kopplungsarme, mit der jeweiligen Achse (30) gekoppelt ist, wobei Enden der Hebel (26, 28) oder Kopplungsarme, die an der Klappe (22) befestigt sind, in eine Schwenkrichtung beabstandet sind.

8. Drehschieber nach einem der vorstehenden Ansprüche, wobei der Verschluss (16) um einen Winkel zwischen 60 und 210 Grad, vorzugsweise zwischen 80 und 100 Grad oder etwa 90 Grad, schwenkbar ist.

9. Drehschieber nach einem der vorstehenden Ansprüche, wobei ein Schwenkpunkt (24) zu einer der Führungsplatten (18) und/oder zu dem Strömungsrichtungsende des Strömungswegs (20) versetzt ist.

10. Drehschieber nach einem der vorstehenden Ansprüche, wobei der Strömungsweg (20) zu einem Mittelpunkt des Gehäuses (10) in eine Richtung senkrecht zu der Strömungsrichtung (14) versetzt ist.

11. Drehschieber nach einem der vorstehenden Ansprüche, wobei der Verschluss (16) konfiguriert ist, um den Kanal (12) und den Strömungsweg (20) an einem Einlass des Drehschiebers zu schließen.

12. Drehschieber nach einem der vorstehenden Ansprüche, wobei das Gehäuse (10) und/oder der Verschluss (16) aus Edelstahl hergestellt sind.

13. Drehschieber nach einem der vorstehenden Ansprüche, der zum wahlweise Bereitstellen von Luft und/oder einem brennbaren Gasgemisch konfiguriert ist.

14. Verbrennungsmotor, vorzugsweise ein Gasmotor, umfassend mindestens einen Drehschieber nach einem der vorstehenden Ansprüche.

## Revendications

1. Soupape rotative destinée à un moteur à combustion, de préférence un moteur à gaz, comprenant :
un boîtier (10) définissant une direction longitudinale de la soupape rotative, dans laquelle le boîtier (10) comprend une forme essentiellement cylindrique dans la direction longitudinale et comprend un canal (12) traversant destiné à fournir un écoulement de fluide, le canal (12) définissant une direction d'écoulement (14) essentiellement perpendiculaire à l'axe longitudinal, et
un obturateur (16), ledit obturateur (16) pouvant pivoter par rapport au boîtier (10) entre une position fermée dans laquelle il obture le canal (12) au niveau d'une extrémité directionnelle d'écoulement du canal (12) et une position ouverte dans laquelle il permet un écoulement de fluide à travers le canal (12),
dans laquelle le canal (12) comprend deux plaques de guidage (18) s'étendant le long de la direction d'écoulement (14) et de la direction longitudinale au niveau d'extrémités radialement opposées du canal (12) et définissant un trajet d'écoulement (20), l'extension des plaques de guidage (18) étant au moins partiellement linéaire,
dans laquelle les plaques de guidage (18) sont formées comme une surface essentiellement plane et ont différentes extensions dans la direction d'écoulement (14), dans laquelle l'une des plaques de guidage (18) est positionnée plus près d'une paroi du boîtier (10) dans une direction radiale ou dans une direction perpendiculaire à la direction d'écoulement (14) et est en contact avec des extrémités directionnelles d'écoulement opposées du canal (12), et
dans laquelle l'autre plaque de guidage (18) n'entre en contact qu'avec une seule extrémité directionnelle d'écoulement du canal (12), permettant ainsi un pivotement de l'obturateur (16) autour de l'extrémité libre de ladite autre plaque de guidage (18) et un alignement de l'obturateur (16) le long d'une surface de ladite autre plaque de guidage (18) opposée au trajet d'écoulement (20) dans la position ouverte de l'obturateur (16).

2. Soupape rotative selon la revendication 1, dans laquelle les plaques de guidage (18) sont formées comme une surface essentiellement droite et/ou comprennent une forme essentiellement rectangulaire, prismatique ou trapézoïdale.

3. Soupape rotative selon la revendication 1 ou 2, dans laquelle l'obturateur (16) comprend un volet (22), ledit volet (22) ayant une forme semi-circulaire, incurvée, courbée, parabolique ou en arc, dimensionnée et disposée pour empêcher un écoulement de fluide dans la position fermée de l'obturateur (16).

4. Soupape rotative selon la revendication 3, dans laquelle le volet (22) est disposé le long d'une surface d'une plaque de guidage (18) opposée au trajet d'écoulement (20) dans la position ouverte de l'obturateur (16).

5. Soupape rotative selon la revendication 3 ou 4, dans laquelle le volet (22) est formé et disposé pour entrer en contact avec au moins une plaque de guidage (18) ou chaque plaque de guidage (18) au niveau de l'extrémité directionnelle d'écoulement du canal (12) dans la position fermée de l'obturateur (16).

6. Soupape rotative selon l'une quelconque des revendications 3 à 5, dans laquelle le volet (22) peut pivoter autour d'au moins un axe (30) prévu au niveau d'une extrémité longitudinale du canal (12) ou autour de deux axes (30) concentriques disposés au niveau d'extrémités longitudinales opposées du canal (12).

7. Soupape rotative selon la revendication 6, dans laquelle le volet (22) est accouplé à l'axe (30) respectif au niveau de l'extrémité longitudinale respective par l'intermédiaire d'au moins un levier (26, 28) ou bras d'accouplement, de préférence de deux leviers (26, 28) ou bras d'accouplement, dans laquelle des extrémités des leviers (26, 28) ou bras d'accouplement qui sont fixées au volet (22) sont espacées dans une direction de pivotement.

8. Soupape rotative selon l'une quelconque des revendications précédentes, dans laquelle l'obturateur (16) peut pivoter selon un angle compris entre 60 et 210 degrés, de préférence entre 80 et 100 degrés ou d'environ 90 degrés.

9. Soupape rotative selon l'une quelconque des revendications précédentes, dans laquelle un point de pivotement (24) est décalé vers l'une des plaques de guidage (18) et/ou vers l'extrémité directionnelle d'écoulement du trajet d'écoulement (20).

10. Soupape rotative selon l'une quelconque des revendications précédentes, dans laquelle le trajet d'écoulement (20) est décalée vers un point central du boîtier (10) dans une direction perpendiculaire à la direction d'écoulement (14).

11. Soupape rotative selon l'une quelconque des revendications précédentes, dans laquelle l'obturateur (16) est conçu pour obturer le canal (12) et le trajet d'écoulement (20) au niveau d'une entrée de la soupape rotative.

12. Soupape rotative selon l'une quelconque des revendications précédentes, dans laquelle le boîtier (10) et/ou l'obturateur (16) sont faits d'acier inoxydable.

13. Soupape rotative selon l'une quelconque des revendications précédentes conçue pour fournir sélectivement de l'air et/ou un mélange de gaz combustibles.

14. Moteur à combustion, de préférence un moteur à gaz, comprenant au moins une soupape rotative selon l'une quelconque des revendications précédentes.
